# FASCICULE DE BREVET EUROPEEN

(11) **EP 0 473 478 B1**
(45) Date de publication et mention de la délivrance du brevet: **28.09.1994**
(21) Numéro de dépôt: 91402143.1
(22) Date de dépôt: 30.07.1991
(51) Int. Cl.: A23B 7/08, A23G 3/00

(54) **Procédé de confisage de fruits**
Verfahren zum Kandieren von Früchten
Process for candying fruits

(30) Priorité: 22.08.1990 FR 9010562
(43) Date de publication de la demande: 04.03.1992
(73) Titulaire: MIDIAL, F-92522 Neuilly-sur-Seine Cédex (FR)
(72) Inventeur: Ambid, Christian, F-31170 Tournefeuille (FR); Taillan, Eric, F-13100 Le Tholonet (FR)
(74) Mandataire: Polus, Camille

(56) Documents cités:
- FR-A- 2 098 889
- FR-A- 2 312 966
- FR-A- 2 644 324
- GB-A- 1 322 432
- GB-A- 2 097 645
- US-A- 2 860 994
- US-A- 4 350 711

## Description

La présente invention concerne un procédé optimisé de confisage de fruits (cerises, prunes, etc...) utilisant la pénétration différentielle des sucres. Ce procédé permet d'augmenter les rendements tout en réduisant la durée du confisage (on désigne par rendement de confisage, le rapport pondéral entre le fruit confit et le fruit avant sa mise au sucre).

Les sirops de confisage mis en oeuvre doivent simultanément satisfaire à des conditions de viscosité, d'absence de cristallisation (précipitation du saccharose) et de massage (précipitation du dextrose) et à de bons rendements de confisage.

Les conditions de viscosité constituent un critère important, particulièrement dans le cas du sirop hautement concentré utilisé dans la dernière phase du confisage. En effet, une viscosité trop élevée s'oppose à un bon égouttage des fruits, une fois que le confisage proprement dit est terminé; une telle viscosité a pour effet de rendre les fruits poisseux et collants.

La cristallisation et le massage doivent être évités dans le fruit confit; les changements de texture qui en découlent rendent le produit fini non commercialisable.

Par ailleurs, le rendement de confisage doit être le plus élevé possible.

Afin de satisfaire à l'ensemble de ces trois conditions, les sirops de confisage sont traditionnellement constitués par un mélange de saccharose et d'un sirop de glucose. Ce dernier qui doit avoir un D.E. (Dextrose - Equivalent) adapté à l'effet recherché, est généralement obtenu par hydrolyse de l'amidon selon le procédé mixte acide - enzyme. La présence de sirop de glucose est techniquement bénéfique, car il évite les problèmes de recristallisation observés lorsque le sirop ne renferme que du saccharose ou des sucres issus de son inversion (lévulose et dextrose). En effet, le saccharose cristallise, aux températures ordinaires, lorsque la concentration atteint 67%, donc à une concentration nettement inférieure à celle retenue dans la pratique pour les fruits confits (75 à 80%). Il en est de même pour le dextrose (solubilité : 44% à 20°C), issu de l'inversion du saccharose se produisant dans les conditions d'acidité et de température du confisage : le risque de massage est alors important.

En outre, l'abaissement de la teneur en saccharose des sirops de confisage peut être recherché pour deux autres raisons :
- le saccharose présente l'inconvénient d'être un produit dont le prix, lié à divers facteurs économiques, est assez fluctuant, et
- le pouvoir sucrant élevé du saccharose peut, dans certains cas, être considéré comme préjudiciable d'un point de vue organoleptique.

Il a donc été proposé des sirops de confisage de moins en moins riches en saccharose.

Cependant, il apparaît que la diminution de la teneur en saccharose des sirops de confisage au profit du sirop de glucose, entraîne une baisse notable des rendements de confisage. De plus, les sirops de glucose utilisés pour remplacer le saccharose présentent des teneurs élevées en polysaccharides responsables d'une diminution de la pression osmotique et d'une augmentation de la viscosité du sirop de confisage.

Un but de l'invention est de résoudre ces problèmes consécutifs à une diminution de la teneur en saccharose des sirops de confisage.

Un autre but de l'invention est d'augmenter le rendement et de diminuer la durée du confisage en jouant sur la composition du sirop de confisage au cours du procédé.

Ces buts sont atteints conformément à l'invention en effectuant le confisage d'abord avec des sirops riches en saccharose, puis avec des sirops riches en lévulose et/ou en dextrose.

L'invention a ainsi pour objet un procédé de confisage de fruits, dans lequel on met les fruits, successivement dans des sirops permettant d'élever progressivement leur concentration en sucres jusqu'à 65 à 80° Brix, caractérisé en ce que l'on utilise d'abord (a) des sirops contenant essentiellement du saccharose, notamment au moins 90% des sucres présents, jusqu'à ce que la concentration des fruits atteigne 40 à 50° Brix, de préférence 43 à 46° Brix, puis (b) des sirops contenant essentiellement du lévulose et/ou du dextrose, notamment dans une proportion d'au moins 90% des sucres présents.

En effet, les présents inventeurs ayant étudié la cinétique de pénétration des sucres dans les fruits ont constaté que le saccharose s'accumule en grande quantité en début de confisage, puis que les quantités accumulées au sein du fruit deviennent ensuite inversement proportionnelles aux degrés Brix dudit fruit. Il en est de même pour le dextrose, avec un net décalage de la courbe vers les hauts degrés Brix. De plus, en deçà de 45 degrés Brix, le saccharose s'accumule de manière préférentielle par rapport au dextrose. Cette tendance s'inverse au-delà de 45 degrès Brix.

Il est judicieux de faire varier le gradient de concentrations entre les fruits et le sirop de confisage afin d'accélérer le phénomène de pénétration des sucres dans les hauts degrès Brix : ainsi on peut utiliser un gradient de 3 à 10, notamment 5 degrés Brix avant 45 degrés Brix et un gradient de 8 à 15, notamment 10 degrés Brix au-delà.

L'utilisation du procédé de confisage selon l'invention montre une amélioration très nette de la durée de confisage (10%) et des rendements (5%), par rapport au confisage "continu" classique.

L'exemple suivant illustre l'invention.

### EXEMPLE : Confisage de bigarreaux (Prunus Avium, variété Napoléon).

On a effectué :
(1) un confisage avec du sirop "pur saccharose" jusqu'à des fruits ayant 44,1 degrés Brix, puis avec du sirop "pur névuline" (dextrose et lévulose 50:50 ); et par ailleurs
(2) un confisage "classique" avec du sirop de glucose 70 D.E., à titre comparatif.

Le protocole de confisage est le suivant :
- mise au sucre de fruits issus de saumure et blanchis (1 h 30 à ébullition) dans un sirop à 25 degrés Brix, le récipient étant clos afin d'éviter une évaporation trop importante le premier jour, et donc un racornissement des fruits;
- à partir du deuxième jour, le récipient est découvert, puis les degrés Brix du sirop et des bigarreaux mesurés toutes les 24 heures. L'évaporation est compensée par l'addition d'un nouveau sirop, de même composition par rapport à la matière sèche, mais plus riche en sucres (5 degrés Brix de plus).

Le panel de dégustation effectuée à la suite de ces deux confisages est positif. Cependant, on note un léger racornissement des fruits dans le cas du confisage classique.

Les résultats sont rassemblés dans le Tableau I suivant :
On constate une augmentation du rendement de confisage de 5,8% et une accélération du processus de 10% (le confisage selon le présent procédé permet de gagner 1 jour), par l'utilisation du confisage selon le procédé de l'invention par rapport au confisage "classique".

**Tableau I**

| Evolution des degrés Brix des sirops et des bigarreaux au cours d'un confisage selon le procédé de l'invention et d'un confisage classique. | | | | |
|---|---|---|---|---|
| | Confisage selon le présent procédé (1) | | Confisage classique (2) | |
| Temps (jours) | °Brix Sirop | °Brix Fruits | °Brix Sirop | °Brix Fruits |
| 0 | 25,0 | 1,0 | 25,0 | 1,0 |
| 1 | 16,5 | 14,4 | 18,6 | 13,2 |
| 2 | 21,0 | 19,2 | 21,6 | 20,1 |
| 3 | 29,9 | 28,8 | 30,7 | 28,8 |
| 4 | 39,0 | 36,0 | 38,6 | 35,4 |
| 5 | 46,4 | 44,1 | 46,2 | 43,2 |
| 6 | 53,8 | 54,0 | 54,2 | 50,1 |
| 7 | 64,0 | 62,4 | 59,6 | 57,0 |
| 8 | 71,0 | 70,8 | 66,8 | 64,8 |
| 9 | 78,2 | 78,0 | 73,0 | 72,0 |
| 10 | | | 80,0 | 78,0 |
| Rendement de confisage | 136,6 | | 128,7 | |

On a comparé dans le Tableau II ci-après les rendements obtenus après confisage "pur saccharose", confisage "pur sucre interverti", confisage "pur sirop de glucose 70 D.E." et confisage selon le procédé de l'invention.

**TABLEAU II**

| | Rendement de confisage | % de variation du rendement par rapport au rendement du confisage selon le procédé de l'invention |
|---|---|---|
| Confisage "pur saccharose" | 130,1 | 4,8 |
| Confisage "pur sucre inverti" | 129,1 | 5,5 |
| Confisage "pur sirop de glucose 70 D.E." | 128,7 | 5,8 |
| Confisage selon le procédé de l'invention | 136,6 | 0 |

Dans tous les cas, l'aspect général des bigarreaux est satisfaisant. Le panel de dégustation est positif.

Les différents rendements sont calculés pour des produits finis ayant 78 degrés Brix, excepté pour le confisage "pur saccharose" où des problèmes de cristallisation ne permettent pas de dépasser 71,4 degrés Brix dans les fruits.

## Revendications

1. Procédé de confisage de fruits, dans lequel on met les fruits, successivement dans des sirops permettant d'élever progressivement leur concentration en sucres jusqu'à 65 à 80° Brix, caractérisé en ce que l'on utilise d'abord (a) des sirops contenant essentiellement du saccharose, jusqu'à ce que la concentration des fruits atteigne 40 à 50° Brix, puis (b) des sirops contenant essentiellement du lévulose et/ou du dextrose.

2. Procédé selon la revendication 1, caractérisé en ce que dans l'étape (a) le saccharose représente au moins 90% des sucres présents dans les sirops.

3. Procédé selon la revendication 2, caractérisé en ce que l'on utilise des sirops pur saccharose.

4. Procédé selon l'une des revendications 1 à 3, caractérisé en ce que l'on effectue l'étape (a) jusqu'à une concentration de 43 à 46° Brix.

5. Procédé selon la revendication 4, caractérisé en ce que l'on effectue l'étape (a) jusqu'à une concentration de 45° Brix.

6. Procédé selon l'une des revendications 1 à 5, caractérisé en ce que dans l'étape (b) le glucose et/ou le dextrose représente au moins 90% des sucres présents dans les sirops.

7. Procédé selon la revendication 6, caractérisé en ce que l'on utilise des sirops pur névuline.

8. Procédé selon la revendication 6, caractérisé en ce que l'on utilise des sirops pur lévulose.

9. Procédé selon la revendication 6, caractérisé en ce que l'on utilise des sirops pur dextrose.

10. Procédé selon l'une des revendications 5 à 9, caractérisé en ce que l'on utilise un gradient de 3 à 10° Brix dans l'étape (a) et un gradient de 8 à 15° Brix dans l'étape (b).

11. Procédé selon la revendication 10, caractérisé en ce que l'on utilise un gradient de 5° Brix dans l'étape (a) et un gradient de 10° Brix dans l'étape (b).

## Claims

1. Process for crystallising fruits, in which the fruits are placed successively in syrups in order to increase their sugar concentration progressively to 65-80° Brix, characterised in that, first, syrups (a) are used, containing essentially sucrose, until the concentration of the fruits reaches 40-50° Brix, then syrups (6) are used, containing assentially laevulose and/or dextrose.

2. Process according to claim 1, characterised in that, in step (a), sucrose represents at least 90% of the sugars present in the syrups.

3. Process according to claim 2, characterised in that pure sucrose syrups are used.

4. Process according to one of claims 1 to 3, characterised in that step (9) is carried out up to a concentration of 43 to 46° Brix.

5. Process according to claim 4, characterised in that step (a) is carried out up to a concentration of 45° Brix.

6. Process according to one of claims 1 to 5, characterised in that, in step (b), glucose and/or dextrose represents at least 90% of the sugars present in the syrups.

7. Process according to claim 6, characterised in that pure nevulin syrups are used.

8. Process according to ciaim 6, characterised in that pure laevulose syrups are used.

9. Process according to claim 6, characterised in that pure dextrose syrups are used.

10. Process according to one of claims 5 to 9, characterised in that a gradient of 3 to 10° Brix is used in step (a) and a gradient of 8 to 15° Brix in step (b).

11. Process according to claim 10, characterised in that a gradient of 5° Brix is used in step (a) and a gradient of 10° Brix in step (b).

## Patentansprüche

1. Verfahren zum Kandieren von Früchten, bei dem man die Früchte nacheinander in Sirups einbringt, die es ermöglichen, ihre Zuckerkonzentration fortschreitend bis zu 65 bis 80° Brix zu erhöhen, dadurch gekennzeichnet, daß man zuerst (a) Sirups verwendet, die im wesentlichen Saccharose enthalten, bis die Konzentration der Früchte 40 bis 50° Brix erreicht und anschließend (b) Sirups, die im wesentlichen Lävulose und/oder Dextrose enthalten.

2. Verfahren nach Anspruch 1, dadurch gekennzeichnet, daß in der Stufe (a) die Saccharose mindestens 90 % der in den Sirupen enthaltenen Zucker bildet.

3. Verfahren nach Anspruch 2, dadurch gekenzeichnet, daß man reine Saccharose-Sirups verwendet.

4. Verfahren nach einem der Ansprüche 1 bis 3, dadurch gekennzeichnet, daß man die Stufe (a) bis zu einer Konzentration von 43 bis 66° Brix durchführt.

5. Verfahren nach Anspruch 4, dadurch gekennzeichnet, daß man die Stufe (a) bis zu einer Konzentration von 45° Brix durchführt.

6. Verfahren nach einem der Ansprüche 1 bis 5, dadurch gekennzeichnet, daß in der Stufe (b) die Glucose und/oder die Dextrose mindestens 90 % der in den Sirups vorhandenen Zucker bilden.

7. Verfahren nach Anspruch 6, dadurch gekennzeichnet, daß man reine Nevulin-Sirups verwendet.

8. Verfahren nach Anspruch 6, dadurch gekennzeichnet, daß man reine Lävulose-Sirups verwendet.

9. Verfahren nach Anspruch 6, dadurch gekennzeichnet, daß man reine Dextrose-Sirups verwendet.

10. Verfahren nach einem der Ansprüche 5 bis 9, dadurch gekennzeichnet, daß man einen Gradienten von 3 bis 10° Brix in der Stufe (a) und einen Gradienten von 8 bis 15° Brix in der Stufe (b) verwendet.

11. Verfahren nach Anspruch 10, dadurch gekennzeichnet, daß man einen Gradienten von 5° Brix in der Stufe (a) und einen Gradienten von 10° Brix in der Stufe (b) verwendet.
